# EUROPEAN PATENT APPLICATION

(11) **EP 2 547 097 A1**
(43) Date of publication of application: **16.01.2013**
(21) Application number: 11305930.7
(22) Date of filing: 15.07.2011
(51) Int. Cl.: H04N 5/353, H04N 5/235

(54) **Method of controlling an electronic image sensor**

(71) Applicant: Thomson Licensing, 92130 Issy-les-Moulineaux (FR)
(72) Inventor: Rotte, Jeroen, 4835 GR Breda (NL); Centen, Petrus Gijsbertus Maria, 5051 BW Goirle (NL)
(74) Representative: Lindemann, Robert

(57) **Abstract**

A method of controlling an electronic image sensor comprises providing a first time period defining an exposure period, resetting the electronic image sensor at the beginning of the first time period, controlling the electronic image sensor to be light-sensitive for multiple second time periods nested within the first time period, generating a measurable quantity corresponding to an amount of light that impinged on the electronic image sensor while it was light-sensitive during the first time period, and reading out the electronic image sensor at the end of the first time period. The method allows for reducing the total amount of light that is used for producing an output signal during a total exposure period, while maintaining exposure stretched over a minimum or fixed exposure time, thus allowing for motion blur to build up.

## Description

The present invention relates to a method of controlling an electronic image sensor in such a way that the sensitivity of the image sensor can be selectively reduced, while essentially maintaining a desired minimum or fixed exposure time for each image, field or frame. The invention also relates to a control circuit of an image sensor that is adapted to perform the inventive method. The invention yet further relates to a camera having an image sensor and a control circuit adapted to perform the inventive method.

In the following specification the terms image, field or frame are used synonymously for a time period during which an image is captured, unless otherwise noted. The terms field and frame originate from capturing interlaced and progressive video images, respectively, field relating to a subset of all pixels of the image sensor being exposed for capturing part of an image, a frame including several fields. The term exposure period relates to the time available for exposure of an image, for example during a field or frame time in video signals.

Present-day electronic image sensors, e.g. CCD or CMOS image sensors, can be controlled over a wide range of exposure times, allowing for proper exposure under varying lighting conditions. However, a minimum or fixed exposure time may be desired, for example for obtaining a desired artistic impression or when taking video images. If a minimum or fixed exposure time is given, captured images may provide a certain amount of so-called motion blur, i.e. moving objects occur less sharp than stationary objects, fast moving objects occur even less sharp than slowly moving objects. However, in case of relatively bright lighting conditions of a scene to be captured, long exposure times may result in overexposure of the images, i.e. brightly lit portions of the scene may not provide any detailed information at all.

In order to avoid overexposure of the image sensor optical filters are provided in front of the lens, which filters reduce the amount of light impinging on the sensor. A specific type of filters is referred to as neutral density filters. Optical neutral density filters reduce the amount of visible light impinging on the sensor of all colours, or wavelengths, by essentially the same amount or factor, thus preserving the same colour appearance, or hue or tone of the captured scene as if taken without the filter.

Optical neutral density filters, however, are available in fixed reduction factors only. Whenever a different reduction factor is required, the filter needs to be changed. Changing filters is typically either done manually, or by providing an arrangement of changeable filters are, e.g. arranged on a rotatable disc. The arrangement of changeable filters is controlled in such a way that a desired filter is placed in front of the lens, or, if so desired, no filter is placed in front of the lens. The filter arrangement may be operated by hand or can be motorized.

In any case, filters and filter arrangement are adding to the size and weight of the camera, and can be cumbersome to operate.

It is an object of the invention to reduce the complexity, size and weight of a camera while providing a neutral density feature.

A method of controlling an electronic image sensor in a camera providing a neutral density feature in accordance with the invention includes the steps of providing a first time period defining an exposure period and resetting the electronic image sensor at the beginning of the first time period. The exposure period may for example be a frame or field period in a video system. After resetting the electronic image sensor is controlled to be light-sensitive for multiple second time periods nested within the first time period. The electronic image sensor, during exposure, generates a measurable quantity corresponding to an amount of light that impinged on the electronic image sensor while and was light-sensitive. At other times the electronic image sensor is not light sensitive, i.e. it does not generate a measurable quantity corresponding to an amount of light that impinged on the electronic image sensor, or a measurable quantity that was actually generated is not available at an output of the image sensor. The measurable quantity may for example be an electronic charge. The method further includes reading out the electronic image sensor at the end of the first time period. Reading out the electronic image sensor multiple times during the first time period is not precluded. Likewise, resetting the electronic image sensor multiple times during the first time period is not precluded. For example, a reset may be performed immediately before controlling the electric image sensor to be light-sensitive. In this case any measurable quantity generated in the preceding period during which the electronic image sensor was light-sensitive is stored in such a way that it is not influenced by resetting. The measurable quantities generated during multiple periods during which the electronic image sensor was light-sensitive during one first time period are added, for example by additively storing them in a same storage means. A very simple representation of a storage means is for example a capacitor storing electronic charges. If the electronic image sensor generates electronic charges as measurable quantity during the periods during which it is light-sensitive these charges may be stored in the capacitor, where they add up and produce a voltage that can be measured across the electrodes of the capacitor.

In a development of the inventive method the multiple second time periods are placed temporally equidistant within the first time period. Temporally equidistant in the sense of the invention means that beginning and/or end, respectively, of subsequent second time periods are spaced at equal time distances.

In another development of the inventive method the second time periods are substantially evenly distributed within the first time period. In other words, the second time periods within the first time period are not concentrated for example at the beginning or the end of the first time period.

In yet another development of the inventive method the second time periods nested within a first time period have increasing or decreasing individual durations, or have durations that increase towards the centre of the first time period and decrease towards the end of the first time period, or vice versa. This development allows for special artistic effects with regard to image blur, for example an adjustment of the perceived amount of motion blur.

In accordance with the preceding development is also possible to modulate the density of second time periods having equal durations that are nested within a first time period in such a way that more a second time periods are located around the centre of the first time period. In other words, the temporal distance between a second time periods decreases towards the centre of the first time period and may increase again towards the end of the first time period.

A further development of the inventive method may be used in electronic image sensors having pixels arranged in lines and columns. Here, the second time periods of two adjacent pixels in one line or of two adjacent pixels in one column are temporally shifted within a first time period with respect to each other. This development may provide an even smoother distribution of image blur across the entire image, taking advantage of the low pass characteristic of the human visual system, but may also allow for removing image blur in a post processing step, using the fact that the image information was captured at known different time instants within the same first time period.

A refinement of the preceding development of the inventive method includes controlling the electronic image sensor in such a way that the second time period of pixels in every other column and/or every other line are located at the same temporal positions within a first time period with respect to each other. This refinement may alleviate image post processing.

A further refinement of the preceding development of the inventive method includes controlling the electronic image sensor in such a way that the temporal positions of the second time periods within the first time periods in the lines or columns are the same for odd and even field, respectively. This refinement may alleviate the task of composing one image from an odd and even field in a post processing step.

In another development of the inventive method a time period defined by the beginning of the first and the end of the last of the multiple second time periods nested within the first time period is arranged centred within the first time period. In other words, the temporal distance between the begin of a first time period and the begin of a first second time period nested within this first time period and the distance between the end of a last second time period nested within the same first time period and the end of that first time period is substantially equal.

In accordance with the invention, the measurable quantity corresponding to the amount of light that impinged on the electronic image sensor during each second time period is additively accumulated during each second time period, and the measurable quantities so accumulated, of all second time periods nested within a first time period, are added prior to the electronic image sensor being read out. Adding of the measurable quantities of all second time periods nested within a first time period may include simply additively accumulating the measurable quantities generated during each of the second time periods nested within a first time period.

Another development of the inventive method includes intermediate, non-destructive readout of the measurable quantities after a number of second time periods that is smaller than the total number of second time periods, and providing the read out quantity to a memory for storing.

Data obtained using this embodiment of the inventive method may for example be used for generating images having a high dynamic range. This object may be achieved for example by providing the stored intermediate read out values of the measurable quantities taken during one or more second time periods to a computing circuit for generating such image having an increased dynamic range.

The generation of high dynamic range images may be alleviated by controlling the second time periods nested within a first time period to have short durations at the beginning of the first time period, followed by second time periods having a long durations at the centre of the first time period, followed by second time periods having short durations at the end of the first time period. Controlling the second time periods in such a way may alleviate the task of removing motion blur when generating images having high dynamic range.

Control of motion artifacts or motion blur in high dynamic range images can be achieved using a group of second time periods of increasing length, and nesting several of such groups within a first time period.

In one development of the inventive method the second time periods located at the beginning of a first time period are longer and are complemented by additional shorter second time periods located at the end of the first time period, or vice versa. The last one of the longer second time periods and the first one of the shorter second time periods, or vice versa, may be spaced apart from each other for a time period that is longer than the distances between the individual longer or shorter second time periods. This embodiment may be used to produce what can be considered artificial ghosting for moving objects, i.e. an image in which the moving image content has a leading or trailing faint reproduction of the moving image content.

It goes without saying that the developments and refinements of the inventive method described in the specification may be combined with other developments and refinements of the inventive method likewise described in this specification, unless they are clearly mutually excluding each other.

In the following the invention will be described with reference to the drawing, in which
- Figure 1: shows one pixel of an exemplary image sensor that can be used in accordance with the invention;
- Figure 2: shows the relation between the magnitude of the output signal of a pixel of the exemplary image sensor and the integration time;
- Figure 3: shows an exemplary distribution of second time periods within a first time period achieving the same effect as a neutral density filter placed before the image sensor;
- Figure 4: shows control signals applied to the pixel of an exemplary image sensor shown in figure 1 in implementing the inventive method;
- Figure 5: shows an exemplary distribution of second time periods within a first time period in accordance with an embodiment of the invention; and
- Figures 6-14: show further exemplary distributions of second time periods within a first time period in accordance with embodiments and developments of the invention.

In the figures, like elements are referenced to with the same reference numerals.

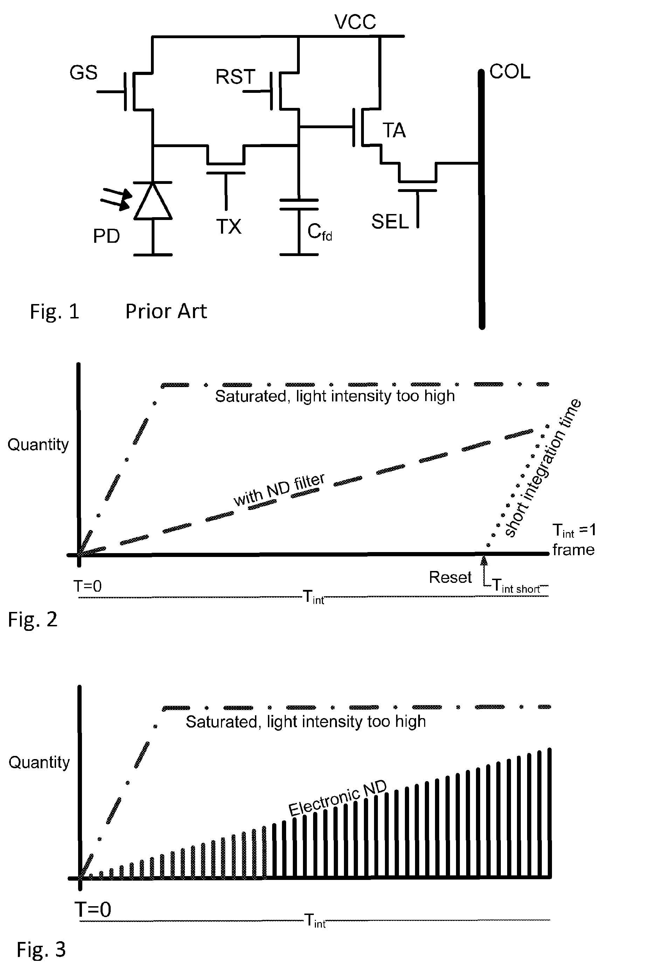

Figure 1 shows one pixel of an exemplary image sensor that can be used in accordance with the present invention. Photodiode PD, when, exposed to light impinging on the sensor, produces a measurable quantity corresponding to the amount of light that impinged on the sensor, for example an electronic charge. Global shutter gate GS is provided for resetting photo diode PD. The charge generated during exposure of photodiode PD can be transferred to a means for storing the charge Cfd via transfer gate TX. The means of storing the charge may be a floating diffusion region formed on a substrate of the image sensor. The means for storing the charge Cfd is connected to a control electrode of transistor TA, which acts as an amplifier. The output of amplifier transistor TA is connected to a column COL line via selection switch SEL. Selection switch SEL may be implemented as a transistor. Reset switch RST is provided for resetting the means for storing the charge.

The inventive method is implemented in the exemplary pixel described above by alternating driving the transfer gate TX and the global shutter gate GS. When global shutter gate GS is driven to be conductive photodiode PD is reset. At the end of the reset operation global shutter gate GS is driven to be non-conductive. Light impinging on photo diode PD after the reset condition has been removed produces an electronic charge corresponding to the amount of light. Then transfer gate TX is driven to be conductive and the charge generated during exposure of the photo diode PD is transferred into the means for storing the charge, which had been reset at the beginning of the total image exposure period. It is reminded that the total image exposure period may be a frame or field period in progressive or interlaced video. Once the charge has been transferred from photo diode PD to the means for storing the charge Cfd transfer gate TX is driven to be non-conductive. Now photo diode PD may be reset and the cycle is repeated once or several times during the entire total image exposure period. At the end of the total image exposure period the charge that has accumulated in the means for storing the charge Cfd is amplified by amplifier transistor TA, and the output signal of amplifier transistor TA is applied to column line COL via selection switch SEL, which is driven to be conductive for that purpose. The amount of attenuation that is achieved can be controlled by controlling the ratio of the times during which the photodiode is light-sensitive and during which the photodiode is in reset condition.

While the inventive method has been exemplary described for a so-called 5T pixel of an image sensor (5T referring to five transistors being used in the pixel circuit) is not limited to this type of pixel circuit. In fact, any image sensor having pixels with a transfer gate and a global shutter gate connected to the photo diode, and being provided with a means for storing a charge can be used.

Figure 2 shows the relation between the magnitude of the output signal of a pixel of the exemplary image sensor and the integration time. The x-axis represents the integration time or total exposure period. The y-axis represents the measurable quantity corresponding to the light that impinged on the sensor while it was light-sensitive. It is assumed that the level of illumination is relatively high. The dash-dotted line rises steeply until it reaches a terminal value, which corresponds to a saturated pixel cell. In other words, the pixel will appear plain white in the image and, unless the part of the scene that has been captured by this particular pixel actually shows a white area, does not convey any useful image information. Clearly, the saturation level of the pixel is reached file before the end of the total exposure period. The dashed line rises much less steep than the dash-dotted line. This line represents the development of the charge in the pixel when a neutral density filter is placed before the image sensor. It is recalled that neutral density filters attenuate all wavelengths at least of the visible spectrum by the same amount, thereby obtaining a darker image while maintaining colour balance. Clearly, at the end of the total exposure period saturation of the pixel do not occur, and it conveys useful image information. The dotted line shows the development of the charge in the pixel when the photodiode of the pixel is controlled to be light-sensitive only for a short period of time. However, a short integration time may produce images having a different appearance than imagers take in the longer integration time, e.g. less motion blur.

Figure 3 shows an exemplary distribution of second time periods within a first time period achieving the same effect as a neutral density filter placed before the image sensor. The dash-dotted line corresponds to the dash-dotted line described in figure 2. The closely spaced vertical lines represent the development of the charge in the means for storing a charge over the total exposure period. Each of the vertical lines corresponds to the photodiode being reset, made light-sensitive, exposed, and the charge generated during exposure being transferred to the means for storing a charge and added to charge that was already present. At the end of the total exposure period the means for storing a charge holds a charge there was the accumulated during several distinct time instants evenly distributed across the total exposure period. In doing so, saturation of the image sensor is presented and motion blur can build up.

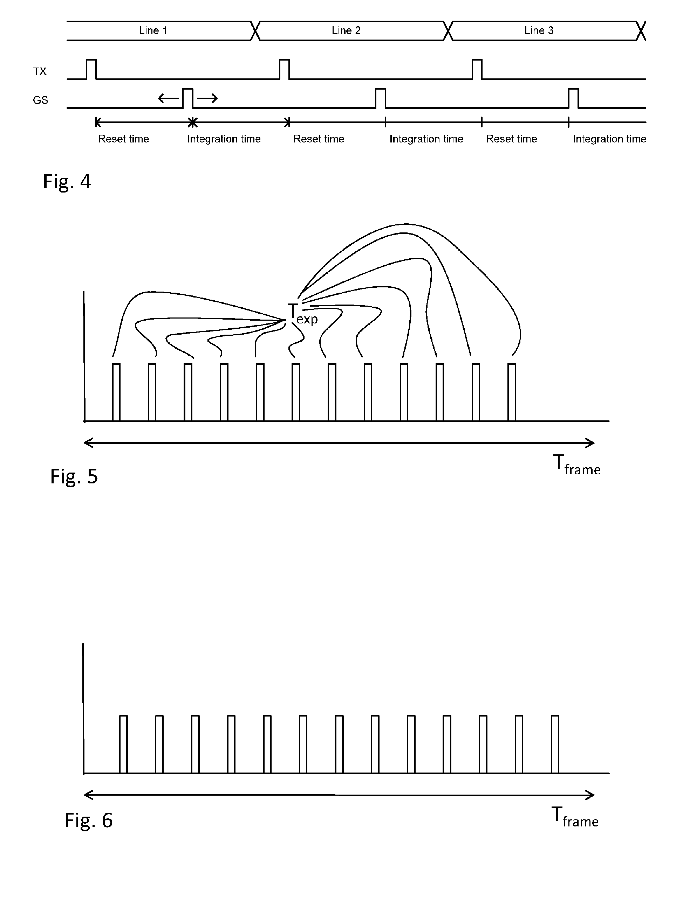

Figure 4 shows control signals applied to the pixel of an exemplary image sensor shown in figure 1 in implementing the inventive method. It is assumed that the exemplary image sensor has pixels arranged in lines and columns. Control signals for the transfer gate TX and the global shutter gate GS are global signals, i.e. are applied to all pixels of the image sensor simultaneously. In figure 4 one line time is exemplarily used as a reset or integration period. A line time corresponds to the time available for exposing a line within a frame or field. It can be calculated as the time that is available for exposing a frame or field divided by the number of lines from which the frame or field is composed. In the example, every line time a transfer pulse is applied to transfer gate TX, causing the transfer and adding of the entire charge generated in the photodiode to the means for storing a charge. Then the photodiode is reset. When a pulse is applied to global shutter gate GS any charge present in the photodiode is dumped to supply voltage VCC. When the pulse applied to global shutter gate GS is over the integration time or exposure time begins. The next time a corresponding pulse is applied to transfer gate TX the charge that has built up in the photodiode during exposure is transferred to an added to the charge present in the means for storing a charge Cfd. This process is repeated until the frame time or total exposure period is over and the pixel is read out via column line COL. After reading out the means for storing a charge Cfd is reset and the next total exposure period begins. The integration time or exposure time can be reduced by shifting the control pulse for the global shutter gate GS to the right, i.e. closer to the next pulse controlling transfer gate TX, and increased by shifting it to the left.

Figure 5 shows an exemplary distribution of second time periods within a first time period in accordance with an embodiment of the invention. The first time period T_{frame} corresponds to the time available for one frame. The second time periods Tₑₓₚ are spaced at equal time distances. The rectangles corresponding to the second time periods Tₑₓₚ in figure 5 indicate the times at which the image sensor is light-sensitive rather than the magnitude of the measurable quantity.

Figure 6 shows a further exemplary distribution of second time periods Tₑₓₚ within a first time period T_{frame} in accordance with another embodiment of the invention. The distribution is similar to the one shown in figure 5. However, in figure 6 the second time periods Tₑₓₚ are evenly distributed within the first time period T_{frame}, i.e. they are equally spaced and not concentrated e.g at the beginning or the end of the first time period T_{frame}. For the sake of clarity the rectangles representing the second time periods are not labelled Tₑₓₚ in this and the following figures.

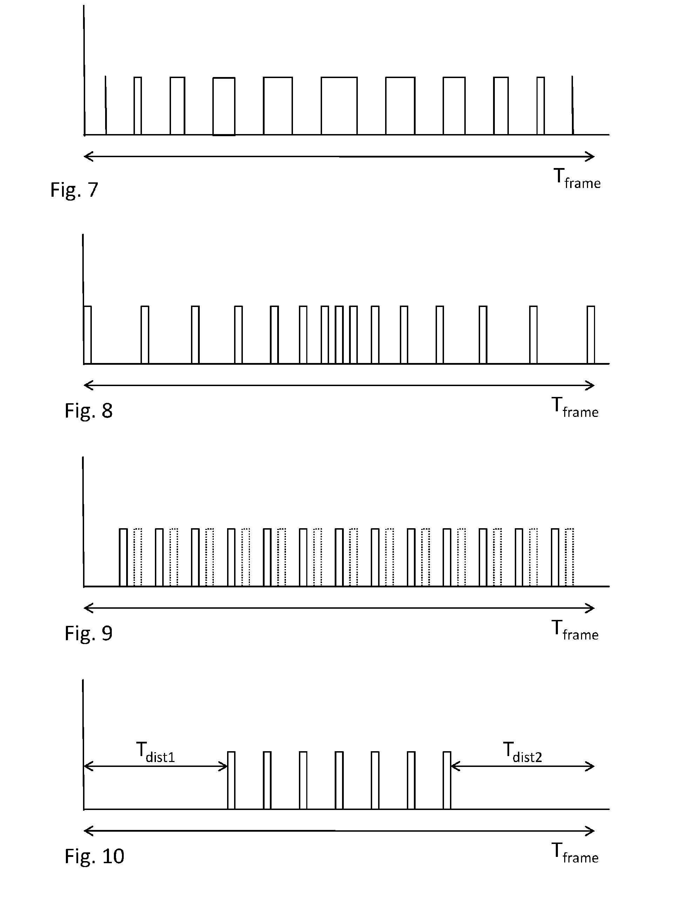

Figure 7 shows a further exemplary distribution of the second time periods within the first time periods in accordance with an embodiment of the invention. The durations of the individual second time periods increase towards the centre of the first time period T_{frame}, and decrease towards the end thereof, similar to a pulse width modulation scheme.

Figure 8 shows yet another exemplary distribution of the second time periods within the first time period T_{frame} in accordance with the invention, in which the duration of the second time periods Tₑₓₚ is substantially the same for all second time periods, but their occurrence over time is modulated similar to a pulse density modulation. In this example, the second time periods Tₑₓₚ are spaced closer together towards the centre of the first time period T_{frame}, and are spaced farther apart towards the beginning and the end thereof. The invention is not limited to this distribution but may also follow other schemes, e.g. the spacing of the second time periods Tₑₓₚ being increasingly denser towards the end of the first time period T_{frame}, or vice versa, or any other distribution.

Figure 9 shows an exemplary distribution of the second time periods Tₑₓₚ within a first time period T_{frame} for two adjacent pixels in one line or in one column. Here the second time periods Tₑₓₚ are temporally shifted with respect to each other. The solid and dotted rectangles represent the second time periods Tₑₓₚ for respective adjacent pixels.

Figure 10 shows a further exemplary distribution of the second time periods Tₑₓₚ within a first time period T_{frame} in accordance with the invention, in which a number of second time periods Tₑₓₚ is grouped and centred within the first time period. The temporal distance T_{dist1} between the beginning of the first time period T_{frame} and the first second time period Tₑₓₚ and the temporal distance T_{dist2} between the end of the last second time period Tₑₓₚ and the end of the first time period T_{frame} is substantially equal. However, the group of second time periods Tₑₓₚ may as well be shifted within the first time period T_{frame} in such a way that the temporal distances T_{dist1} and T_{dist2} are different.

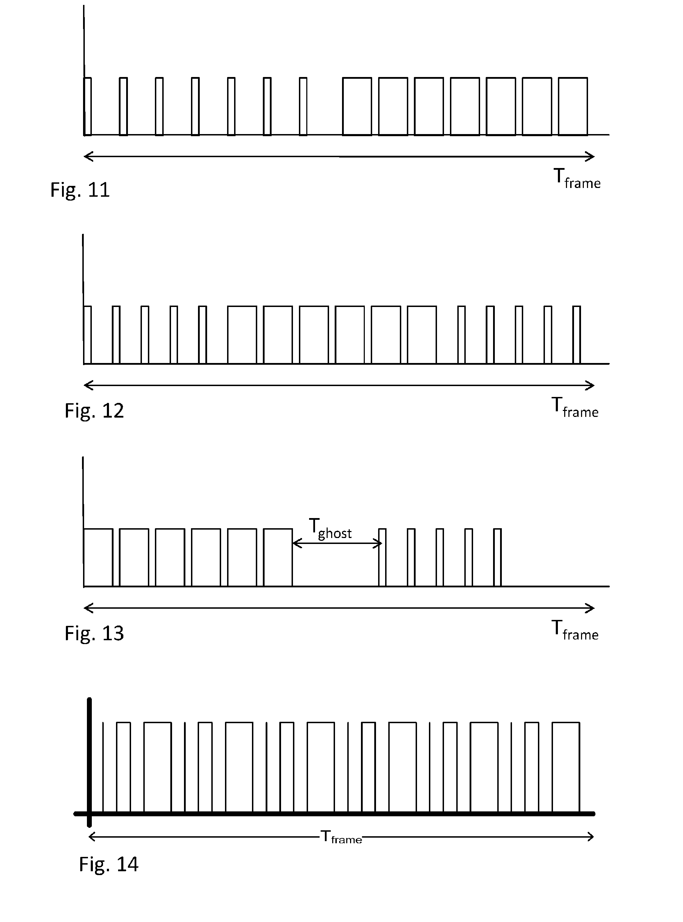

Figure 11 shows a further exemplary distribution of the second time periods Tₑₓₚ within a first time period T_{frame} in accordance with the invention, in which short and long second time periods Tₑₓₚ are nested within a first time period T_{frame} to produce a high dynamic range image. For obtaining a high dynamic range image while maintaining the possibility of controlling the amount of motion blur, a non-destructive intermediate readout of the image sensor needs to be performed. In the exemplary example, the short second time periods Tₑₓₚ are located at the beginning of the first time period T_{frame}, while the long second time periods Tₑₓₚ are located at the end of the first time period T_{frame}. However, this distribution may be modified in accordance with a desired artistic effect, e.g. by "framing" or "bracketing" a sequence of long second time periods Tₑₓₚ centred within the first time period T_{frame} with short second time periods Tₑₓₚ at the beginning and at the end of the first time period T_{frame}, as shown in figure 12.

Figure 13 shows yet a further exemplary distribution of the second time periods Tₑₓₚ within a first time period T_{frame} in accordance with the invention, in which longer second time periods Tₑₓₚ located at the beginning of the first time period T_{frame} are complemented by shorter second time periods Tₑₓₚ at the end of the first time period T_{frame}. This pattern may be useful for producing artificial ghosting. Adjusting the distance T_{ghost} between the groups of long and short second time periods may be used for determining the distance between the main and the ghost image. The position of the long and short second time periods Tₑₓₚ may be exchanged for obtaining pre- or post-ghosting. The number and individual duration of long and short second time periods Tₑₓₚ may be adjusted to determine the amount of ghosting and to include a desired amount of motion blur in both the main image and the ghost image.

Figure 14 shows another exemplary distribution of the second time periods Tₑₓₚ within a first time period T_{frame} in accordance with the invention, in which a group of second time periods Tₑₓₚ of increasing length occupies only a fraction of a first time period T_{frame}, and several identical or substantially identical of such groups are nested within a first time period. This pattern allows for creating a high dynamic range image while still providing information for motion blur.

The invention has been described above using a variety of exemplary patterns of second time periods Tₑₓₚ and their positions within a first time period T_{frame}. However, the invention shall not be considered being limited to those examples. Combinations and variations of the exemplary patterns likewise fall into the scope of this invention.

## Claims

1. A method of controlling an electronic image sensor, comprising the steps of:
- providing a first time period defining an exposure period;
- resetting the electronic image sensor at the beginning of the first time period;
- controlling the electronic image sensor to be light-sensitive for multiple second time periods nested within the first time period;
- generating a measurable quantity corresponding to an amount of light that impinged on the electronic image sensor while it was light-sensitive during the first time period; and
- reading out the electronic image sensor at the end of the first time period.

2. The method of claim 1, wherein the multiple second time periods are placed temporally equidistant within the first time period.

3. The method of claim 1 or 2, wherein the second time periods are substantially evenly distributed within the first time period.

4. The method of claim 1, wherein the second time periods within a first time period have increasing or decreasing individual durations, or have durations that increase towards the centre of the first time period and decrease towards the end of the first time period, or vice versa, or wherein the second time periods are of equal duration, but are spaced farther apart at the beginning and/or the end of a first time period, or vice versa, or wherein substantially identical groups of second time periods are located within the first time period, the second time periods within the groups having increasing duration.

5. The method of claim1, wherein the electronic image sensor has pixels arranged in lines and columns, and wherein the second time periods of two adjacent pixels in one line or of two adjacent pixels in one column, of the electronic image sensor, are temporally shifted with respect to each other.

6. The method of claim 5, including controlling the electronic image sensor in such a way that the second time periods of pixels in every other column and/or every other line are located at the same temporal positions with respect to each other.

7. The method of claim 6, further including controlling the electronic image sensor in such a way that the temporal position of the second time periods in the lines or columns are the same for odd and even fields, respectively.

8. The method of any one of the preceding claims, wherein a time period defined by the beginning of the first and the end of the last of the multiple second time periods nested within a first time period is arranged centred within the first time period.

9. The method of any one of the preceding claims, wherein the measurable quantity corresponding to the amount of light that impinged on the electronic image sensor is additively accumulated during each second time period, the measurable quantities of all second time periods being added prior to the electronic image sensor being read out.

10. The method of any one of the preceding claims, further including intermediate, non-destructive readout of the measurable quantity after a number of second time periods that is smaller than the total number of second time periods, and providing the read out quantity to a memory for storing.

11. The method of claim 10, wherein the stored intermediate read out values of the measurable quantity taken during one or more second time periods are provided to a computing circuit for generating an image having an increased dynamic range when compared to an image that is taken using only one second time period.

12. Control circuit of an image sensor adapted to perform the method of any one or more of the preceding claims.

13. Camera having an image sensor, **characterized by** a control circuit according to claim 12.
